# EUROPÄISCHE PATENTSCHRIFT

(11) **EP 2 370 845 B1**
(45) Veröffentlichungstag und Bekanntmachung des Hinweises auf die Patenterteilung: **10.04.2013**
(21) Anmeldenummer: 09812452.2
(22) Anmeldetag: 09.12.2009
(51) Int. Cl.: G02B 7/00, G02B 7/02

(54) **MONOLITHISCHE OPTISCHE FASSUNG**
MONOLITHIC HOLDER FOR AN OPTICAL ELEMENT
MONTURE MONOLITIQUE POUR UN ELEMENT OPTIQUE

(30) Priorität: 23.12.2008 DE 102008063223
(43) Veröffentlichungstag der Anmeldung: 05.10.2011
(73) Patentinhaber: JENOPTIK Optical Systems GmbH, 07745 Jena (DE)
(72) Erfinder: BORNSCHEIN, Marco, 07745 Jena (DE)
(74) Vertreter: Schaller, Renate
(86) Internationale Anmeldenummer: PCT/DE2009/050070
(87) Internationale Veröffentlichungsnummer: WO 2010/072217

(56) Entgegenhaltungen:
- EP-A2- 1 031 996
- EP-A2- 1 577 693
- DE-A1- 19 827 603
- US-A1- 2001 028 513
- US-A1- 2008 019 011

## Beschreibung

Die Erfindung betrifft eine monolithische optische Fassung, insbesondere eine Linsenfassung, die durch Aussparungen in einen feststehenden äußeren Fassungsring und einen lateral, in senkrechter Richtung zur optischen Achse eines gefassten optischen Elementes verstellbaren inneren Fassungsring unterteilt ist. Derartige Fassungen ermöglichen eine radiale Justierung eines im inneren Fassungsring gefassten optischen Elementes gegenüber dem feststehenden äußeren Fassungsring, der in der Regel mit einem Gehäuse bzw. mit Fassungen anderer optischer Elemente fest verbunden ist. Eine gattungsgemäße Fassung ist aus der DE 10 2007 030 579 A1 bekannt.

Aus der EP 1 020 751 B1 ist eine optische Abbildungsvorrichtung bekannt, bei der eine Außenfassung und ein hierzu verstellbarer Innenring vorzugsweise aus einem Stück, also monolithisch gefertigt sind. Eine zur weggesteuerten Verschiebung eines im Innenring gefassten optischen Elementes in einer Richtung senkrecht zur optischen Achse dienende Manipulatoreinrichtung besteht zwischen dem Innenring und der Au-βenfassung aus einem System von Umfangsschlitzen (Aussparungen), die dazwischen liegende Verbindungsglieder bilden, einem Drehgelenk und wenigstens einem Verstellgelenk mit einem Verstellglied.

Der Nachteil dieser Lösung besteht insbesondere darin, dass diese durch die Vielzahl unterschiedlich ausgebildeter Manipulatoreinheiten, hier Manipulatorelemente genannt, einen komplizierten und unsymmetrischen Aufbau besitzt, der für symmetrische Systeme ungeeignet ist oder zu Systeminstabilitäten führt. Insbesondere erhöhen die in Richtung der optischen Achse versteifend wirkenden, kinematisch jedoch überflüssigen Verbindungsglieder den Fertigungsaufwand, erfordern in Abhängigkeit von der Anzahl zusätzliche Stellkräfte und bewirken, dass sich Deformationen stärker auf den inneren Teil auswirken. Außerdem benötigen die Verstellgelenke eine zusätzliche Blattfeder und müssen zur Gewährleistung der beabsichtigten Justierung in zwei zueinander entgegengesetzten Richtungen verstellt werden, so dass Vorspannelemente für beide Richtungen erforderlich sind.

In der DE 100 51 706 A1 ist ebenfalls eine Fassung offenbart, die durch mehrere Aussparungen in eine Innenfassung und eine Außenfassung geteilt ist, die zwischen den Aussparungen verbunden bleiben, wobei diese Verbindungen im Sinne der Erfindung Manipulatoreinheiten darstellen. Die Aussparungen sind so gelegt, dass über die Betätigung der Verbindungen durch angreifende Manipulatoren die Innenfassung und damit die gefasste Linse axial verschiebbar ist und somit keine radial verschiebbare Fassung vergleichbar mit der Erfindung darstellt.

Aus der DE 10 062 786 A1 ist eine monolithisch hergestellte, deformationsentkoppelte Linsenfassung bekannt, die durch Aussparungen, hier Ringspalt genannt, in einen äußeren Fassungsring und einen inneren Fassungsring unterteilt ist.

Der Ringspalt ist mehrfach unterbrochen von schmalen Verbindungsstegen, hier als Festkörpergelenke bezeichnet. Durch die Verlängerung des Ringspaltes in radialer und tangentialer Richtung an den Festkörpergelenken, erhalten diese eine L-Form, bestehend aus einem radial ausgerichteten äußeren Stegabschnitt und einem tangential ausgerichteten inneren Stegabschnitt.

An den Festkörpergelenken sind jeweils sich gegenüberliegend über die Länge der Festkörpergelenke ausgedehnte Sensoren und Aktuatoren als Folien angebracht. Von den Sensoren detektierte Schwingungen bzw. Deformationen werden über einen Rechner an die Aktuatoren weitergegeben, welche Gegenschwingungen bzw. Gegendeformationen erzeugen.

Mit einer deformationsentkoppelten Linsenfassung ist keine Justierung einer im inneren Fassungsring gefassten Linse zum äußeren Fassungsring möglich, womit es sich auch um keine Fassung zur radialen Justierung einer gefassten Linse handelt.

Die DE 10 2006 060 088 A1 offenbart eine monolithische Linsenfassung, hier Halterung genannt, in der radial federnde Stege ausgebildet sind, deren Fußenden an einer gefassten Linse anliegen. Mit dieser Linsenfassung können Ausdehnungsunterschiede zwischen der Linse und der Linsenfassung infolge von Temperaturschwankungen ausgeglichen werden, jedoch eine gefasste Linse nicht radial justiert werden.

Die WO 2006/119970 A2 betrifft keine monolithische optische Fassung, sondern eine durch eine Baugruppe gebildete Fassung, bestehend aus einem inneren Fassungsring und einem äußeren Fassungsring, die mittelbar über Verbindungselemente verbunden werden, welche jeweils aus zwei miteinander über Stege, hier kleine Brücken genannt, verbundene Blattfedern bestehen.

Aus der EP 1 577 693 A2 ist eine weitere aus einem Stück und damit monolithisch gefertigte Linsenfassung bekannt. In einer bevorzugten Ausführung ist ein Innenring über drei Manipulatoreinheiten, hier Verstellgelenke genannt, mit jeweils zwei Gelenkarmen und einem dazwischen liegenden Verstellteil mit einer Außenfassung verbunden. Zur lateralen Verstellung des Innenringes und damit des optischen Elementes greifen Aktuatoren an den Verstellgelenken an. Anspruch 1 ist gemäβ EP 1 577 693 A2 in die zweiteilige Form aufgeteilt.

Gegenüber der vorgenannten DE 100 51 706 A1 zeichnet sich die hier aufgezeigte Lösung durch eine höhere Temperaturstabilität aus.

Wie in der EP 1 577 693 A2 ausgeführt, ergibt sich bei der Erwärmung des optischen Elementes, z. B. einer Linse, das Problem, dass die Wärme über die nur wenigen und schmalen Verbindungsstellen zwischen dem Innenring und der Außenfassung schlecht abgeleitet werden kann. Die sich dadurch einstellenden Temperaturunterschiede wirken sich nachteilig auf die Abbildungsqualität aus, da insbesondere eine Längenänderung der in eine gleiche Richtung ausgedehnten Gelenkarme aufgrund von Temperaturänderungen zu einer Verschiebung des Innenringes in dieser Richtung führt, was Aberrationen und Koma zur Folge hat.

Dieses Problem wird mit einer Linsenfassung gemäß der EP 1 577 693 A2 im Wesentlichen dadurch behoben, dass die Gelenkarme in tangentiale Richtung um 120° zueinander versetzt an der äußeren Umfangsfläche des Innenringes und an der inneren Umfangsfläche der Außenfassung im Uhrzeigersinn vom Innenring weggerichtet angreifen. Eine Längenänderung der Gelenkarme wird hier in eine einheitliche Verdrehrichtung umgesetzt. Verdrehungen dieser Art führen nicht zu Aberrationen, insbesondere nicht bei einer Linse als optisches Element.

Eine Linsenfassung gemäß der EP 1 577 693 A2 soll auch den Vorteil haben, dass durch eine Verkürzung der Gelenkarme eine höhere Lateralsteifigkeit der Innenringanbindung erreichbar ist und damit die Linsenfassung mit der gefassten Linse gegen Eigenschwingungen steifer ist. Eine höhere Lateralsteifigkeit durch Verkürzung der Gelenkarme geht jedoch zu Lasten der Feinfühligkeit der Verstellung, in die nicht nur die Gliedlänge, sondern auch die Durchbiegung der Gelenkarme eingeht.

Die Länge der Gelenkarme wird hierbei jedoch weiterhin durch die zulässige Werkstoffbelastung vorgegeben. Das heißt, ist bei vorgegebenem Stellweg und vorgegebener Feinfühligkeit die zulässige Werkstoffbelastung erreicht, so ist eine weitere Verkürzung der Gelenke zur Erhöhung der Steifigkeit bzw. Eigenfrequenz nicht möglich. Folglich sind immer zwei relativ dünne und im Verhältnis zum Querschnitt lange Gelenkarme erforderlich, um die Funktion als Verstelleinheit bzw. Gelenk zu bewerkstelligen, was die erreichbare laterale und axiale Steifigkeit grundsätzlich begrenzt.

In der DE 10 2007 030 579 A1 ist eine erste Ausführung für eine lateral verstellbare Linsenfassung beschrieben, wie sie im Wesentlichen einer solchen gemäß der EP 1 577 693 A2 entspricht, das heißt drei um 120° zueinander versetzt angeordnete Manipulatoreinheiten sind jeweils als ein Glied ausgebildet, das an seinem festen Ende in zwei tangential ausgerichtete Gelenkarme, hier Stege genannt, übergeht, die mit dem inneren Fassungsteil bzw. dem äußeren Fassungsteil verbunden sind.

In einer zweiten Ausführungsform sind die das Glied mit dem inneren bzw. äußeren Fassungsteil verbindenden Stege radial ausgerichtet, wodurch eine höhere Lateralsteifigkeit erzielt wird.

Ein Auslenken des Hebels, indem über einen Manipulator am freien Hebelende eine radial wirkende Kraft eingeleitet wird, führt jedoch bei den radialen Stegen im Vergleich zu den tangentialen Stegen zu weitaus höheren Zugkräften in den Stegen. Das Entstehen von unerwünschten Spannungen im Innenring ist hierbei unvermeidbar.

In beiden Ausführungen sind die Manipulatoreinheiten einfache Hebelgetriebe, deren Übersetzung über die Länge des Gliedes und die Durchbiegung der Stege in radialer Richtung bestimmt ist. Um eine hohe Feinfühligkeit bei entsprechenden Stellwegen zu erhalten, werden die Stege bzw. Gelenkarme lang ausgebildet, was zur Verwindung in axialer Richtung führen kann.

Bei allen vorbenannten monolithischen Fassungen sind die Manipulatoreinheiten in ihrer Geometrie und Dimension gezielt so gestaltet, dass mit ihnen eine feinfühlige Justierung möglich ist und eine hohe Justierstabilität, möglichst unabhängig von mechanischen und thermischen Belastungen erreicht wird. Die Manipulatoreinheiten, unter denen die Einheiten verstanden werden, über die ein innerer radial verschiebbarer Fassungsring mit einem äußeren festen Fassungsring verbunden ist und über die eine Verschiebung des inneren Fassungsringes gegenüber dem äußeren Fassungsring eingeleitet wird, stellen gemäß dem Stand der Technik im weitesten Sinne Hebelgetriebe dar.

Hebelgetriebe haben die Funktion, einen Weg oder eine Kraft zu untersetzen oder zu übersetzen. Im Falle von optischen Fassungen soll in der Regel ein Weg untersetzt werden, um das gefasste optische Element möglichst feinfühlig und damit genau zu verschieben.

Um eine monolithische Fassung mit Manipulatoreinheiten, gebildet durch Hebelgetriebe herzustellen, müssen durch Materialschnitte speziell ausgebildete Aussparungen ausgeschnitten werden.

Hierzu werden in der Regel elektroerosive Verfahren wie das Drahterodieren eingesetzt, mit denen sehr feine Schnitte erzeugt werden. Damit können zum einen sehr schmale Aussparungen in der Breite der Trennschnitte und zum anderen durch eine Schnittführung entlang dem Umfang Aussparungen beliebiger Breite, größer der Schnittbreite geschnitten werden.

Der hoch genauen Fertigung solcher Fassungen sowie der feinfühligen Justierbarkeit eines optischen Elementes in dieser Fassung, stehen insbesondere durch den Einsatz elektroerosiver Verfahren hohe Herstellungskosten gegenüber, die dann nicht gerechtfertigt erscheinen, wenn keine hohen Genauigkeitsanforderungen an die Justierung eines in der Fassung gehalterten optischen Elementes gestellt werden.

Der Erfindung liegt die Aufgabe zugrunde, eine monolithische Fassung zu finden, bei der die Aussparungen so in ihrer Geometrie und Dimension vorgegeben sind, dass diese günstig durch Fräsen herstellbar sind, um die Herstellungskosten gering zu halten. Dafür kann ein Verlust an Justierfeinfühligkeit in vorgegebenen Grenzen hingenommen werden.

Diese Aufgabe wird durch eine optische Fassung mit den Merkmalen des Anspruches 1 gelöst.

Vorteilhafte Ausgestaltungen und Weiterbildungen sind Gegenstand der Unteransprüche.

Anhand der Zeichnungen wird die Erfindung im Folgenden beispielhaft näher erläutert.

Es zeigen:

Fig. 1 Draufsicht auf eine erste Ausführung einer erfindungsgemäßen Fassung

Fig. 2 Draufsicht auf eine zweite Ausführung einer erfindungsgemäßen Fassung

Fig. 3 Draufsicht auf eine dritte Ausführung einer erfindungsgemäßen Fassung

Fig. 4 Draufsicht auf eine vierte Ausführung einer erfindungsgemäßen Fassung

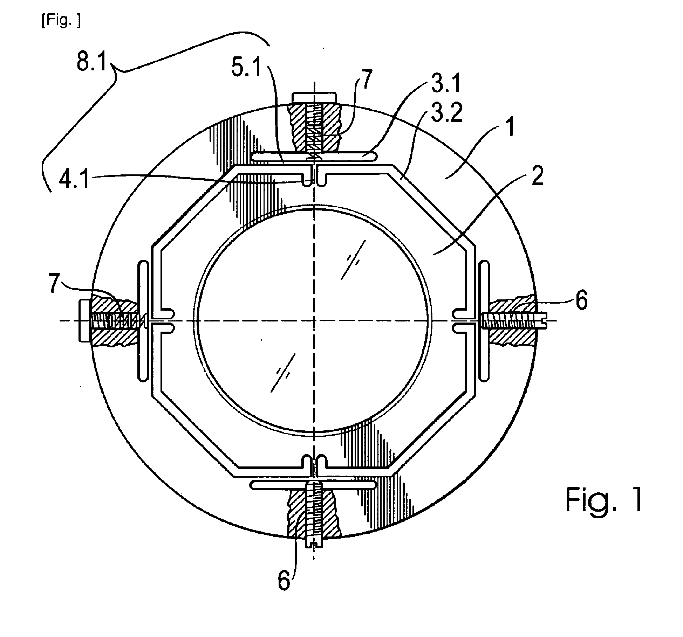

Die in den Fig. 1 bis 4 dargestellten Ausführungen einer erfindungsgemäßen monolithischen optischen Fassung sind Linsenfassungen. Sie sind gleich einer aus dem Stand der Technik gemäß der DE 10 2007 030 579 A1 bekannten Fassung aus einem rotationssymmetrischen planen Körper, insbesondere aus Stahl, Aluminium oder Messing gefertigt und durch mehrere Aussparungen 3 in einen feststehenden äußeren Fassungsring 1 und einen lateral verstellbaren inneren Fassungsring 2 unterteilt.

Grundsätzlich könnten mit einer erfindungsgemäßen optischen Fassung auch andere optische Elemente, wie Spiegel oder Strahlteiler gefasst werden. In der Regel bedürfen diese jedoch nicht einer so genauen Justierung, weshalb die Fassung insbesondere für Linsenfassungen sinnvoll ist.

Ebenfalls gleich einer Linsenfassung gemäß der DE 10 2007 030 579 A1 sind bei einer erfindungsgemäßen Fassung durch die Aussparungen 3 zueinander gleichmäßig versetzt angeordnete, gleiche Manipulatoreinheiten gebildet, über die bei bestimmungsgemäßer Einleitung einer radial angreifenden Kraft F_{R} eine Verschiebung des inneren Fassungsringes 2 zum äußeren Fassungsring 1 bewirkt wird.

Der Unterschied zum Stand der Technik ergibt sich aus der Geometrie der Lage und der Dimension der Aussparungen 3. Alle Ausführungen haben gemeinsam, dass die Aussparungen 3 eine gleiche konstante Breite haben, dadurch können mit einem Fräser mit einem Durchmesser gleich der Breite der Aussparungen 3 mit einem nur einmaligen Fräsen entlang der Mittellinien der Aussparungen 3 alle Aussparungen 3 vollständig gebildet werden.

Die Aussparungen 3 partiell breiter auszuführen, ist möglich, würde jedoch zu keiner anderen Wirkungsweise der Fassung führen, und den Herstellungsaufwand für die Aussparungen 3 erhöhen.

Im Unterschied zum Stand der Technik, bei dem die Aussparungen 3 nur zum Teil direkt durch Trennschnitte geschaffen werden, im Wesentlichen jedoch entlang dem Umfang der Aussparungen 3 geschnitten wird und die Aussparungen 3 ausgeschnitten werden, werden bei einer erfindungsgemäßen Fassung alle Aussparungen 3 durch Trennschnitte im weitesten Sinne hergestellt, wenn man ein Trennen durch Fräsen als Schneiden versteht.

Das heißt, der Weg der relativen Bewegung zwischen der optischen Fassung als Werkstück und dem Fräser als Werkzeug ist identisch mit der Summe der Längen aller Aussparungen 3 und somit so kurz wie nur möglich.

Darüber hinaus verlaufen die Aussparungen 3 in radialer Richtung betrachtet kaum hintereinander, sodass der Weg der Relativbewegung nur geringfügig länger ist als eine Kreislinie innerhalb des Körpers.

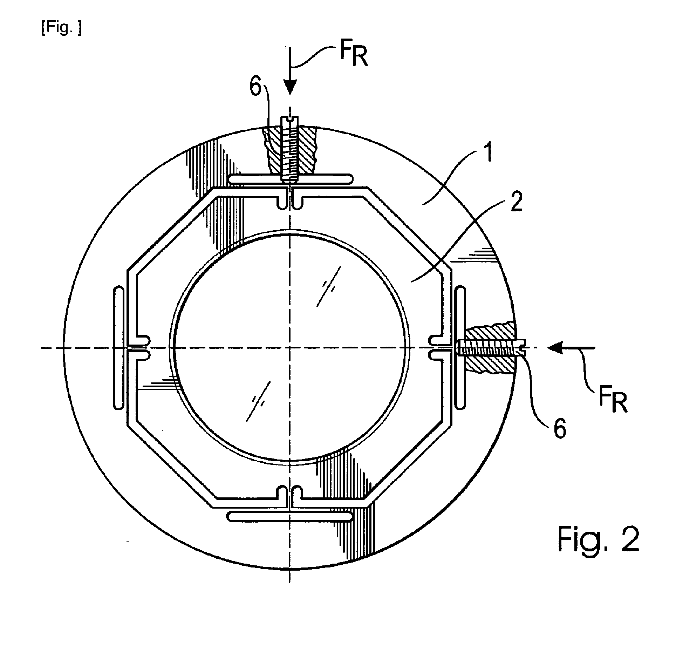

In den Ausführungen gemäß Fig. 1 und 2 gibt es zwei Gruppen von jeweils vier Aussparungen 3.1, 3.2, die gemeinsam T-förmige Stege 8.1 bilden, welche die Manipulatoreinheiten darstellen.

Die T-förmigen Stege 8.1 bestehen aus einem Kopfstück 5.1, welches einen tangential ausgerichteten, äußeren Stegabschnitt bildet, und einem Fußstück 4.1, welches einen radial ausgerichteten inneren Stegabschnitt bildet.

Die erste Gruppe der Aussparungen 3.1 sind geradlinige Schlitze, die jeweils die Oberkante des Kopfstückes 5.1 eines der T-förmigen Stege 8.1 bilden. Die zweite Gruppe der Aussparungen 3.2 sind mehrfach nach innen abgewinkelte Schlitze, die abschnittsweise im Wesentlichen tangential zu einer gedachten Kreislinie verlaufen und jeweils die Unterkante des Kopfstückes 5.1 sowie das Fußstück 4.1 eines der T-förmige Stege 8.1 begrenzen. Das Fußstück 4.1, welches einen inneren Stegabschnitt bildet, ist mit dem inneren Fassungsring 2 verbunden und das Kopfstück 5.1, welches den äußeren Stegabschnitt darstellt, steht endseitig mit dem äußeren Fassungsring 1 in Verbindung.

Vorteilhaft wird man erst alle Aussparungen 3.1 einer Gruppe herstellen bevor man die Aussparungen 3.2 der anderen Gruppe erzeugt. Dadurch sind zwar zwei Umläufe zwischen Werkstück und Werkzeug erforderlich, jedoch kann die Bewegung ohne Umkehr des Richtungssinns erfolgen.

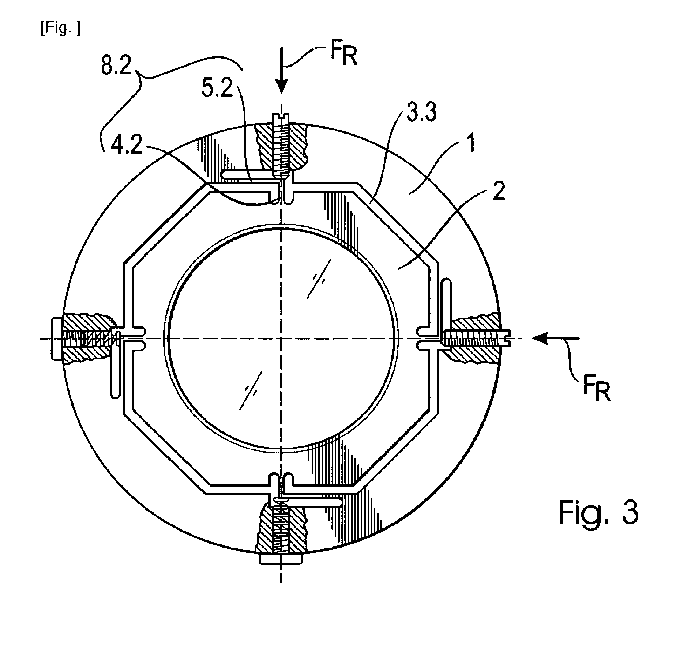

In der Ausführung gemäß Fig. 3 gibt es nur eine Gruppe von vier Aussparungen 3.3.

Sie sind gegenüber den Aussparungen 3.2., die mehrfach nach innen abgewinkelte Schlitze darstellen, um ein nach außen abgewinkeltes Teilstück ergänzt.

Im Zusammenhang bilden diese Aussparungen 3.3 L-förmige Stege 8.2, welche die Manipulatoreinheiten darstellen.

Ein erster Schenkel 4.2 der L-förmigen Stege 8.2 bildet jeweils einen inneren radial ausgerichteten Stegabschnitt, welcher mit dem inneren Fassungsring 2 verbunden ist und der zweite Schenkel 5.2 stellt einen äußeren tangential ausgerichteten Stegabschnitt dar, welcher endseitig mit dem äußeren Fassungsring 1 in Verbindung steht.

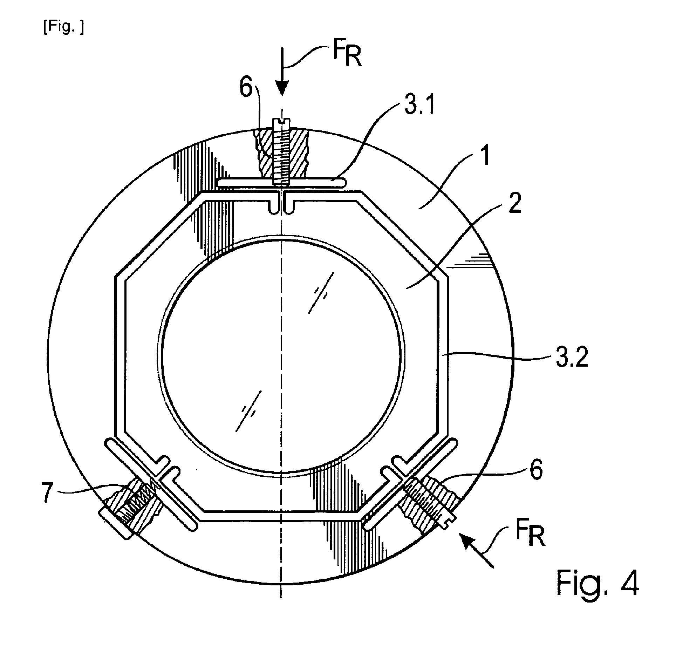

Vorteilhaft sind entweder drei (Fig. 4) oder vier Manipulatoreinheiten (Fig. 1 - 3) vorhanden. Jeweils an zwei der Manipulatoreinheiten greifen Aktuatoren 6 an den inneren radial ausgerichteten Stegabschnitten, das heißt am Fußstück 4.1 bzw. dem ersten Schenkel 4.2 in radialer Richtung wirkend an. Die Aktuatoren 6 können im einfachsten Fall Gewindestifte sein, um die gefasste Linse und somit deren optischen Achse radial zur mechanischen Achse der Fassung verschieben zu können.

Damit eine Verschiebung nicht nur in positive Wirkungsrichtung der Aktuatoren 6 erfolgt, das heißt zur mechanischen Achse hin sondern auch in negativer Wirkungsrichtung, greifen an den anderen Manipulatoreinheiten entweder Druckfedern 7 an oder die Manipulatoreinheiten sind über den gesamten Bewegungsbereich vorgespannt, sodass eine Rückstellkraft über die Vorspannung in jeder Relativlage vom inneren Fassungsring 2 und äußeren Fassungsring 1 vorhanden ist.

Indem die Aktuatoren 6 unmittelbar in radialer Richtung wirkend mit den inneren radial ausgerichteten Stegabschnitten in Verbindung stehen, wird die von den Aktuatoren 6 ausgehende Kraft bzw. der von ihnen realisierte Verschiebeweg direkt auf den inneren Fassungsring 2 übertragen. Die Justierung wird damit vergleichsweise weniger feinfühlig, ist jedoch für viele Anforderungen ausreichend genau möglich.

Der mögliche Verschiebeweg ist bestimmt durch die Steifigkeit des Materials der Fassung und die Länge der äußeren tangential ausgerichteten Stegabschnitte, nämlich der Kopfstücke 5.1 bzw. der ersten Schenkel 4.2, die wie eine Blattfeder wirken.

Eine erfindungsgemäße Linsenfassung lässt sich vorteilhaft durch Fräsen herstellen. In Abhängigkeit von der gewünschten Breite der Aussparungen 3 wird ein Fräser mit einem entsprechenden Durchmesser ausgewählt, womit die Breite der Aussparungen 3 durch die Breite der entstehenden Fräsung bestimmt ist.

Natürlich könnte man die Aussparungen 3 auch in ihrer Breite ganz oder partiell vergrößern, indem man mehrere Fräsungen teilweise überlappend oder auch unmittelbar nebeneinander ausführt.

Eine Verbreiterung der Aussparungen 3 insbesondere im Bereich der Manipulatoreinheiten und insbesondere eine Verlängerung der Stege ermöglicht eine Erhöhung des Verschiebebereiches.

Zur Verbreiterung der Aussparungen 3 wird man einen Fräser mit einem größeren Durchmesser verwenden. Eine Verbreiterung der Materialschnitte, die nur zur Ausbildung des inneren und des äußeren Fassungsrings 2, 1 beitragen, nicht jedoch zur Bildung der Manipulatoreinheiten, hat keine Wirkung auf die Wirkungsweise der Fassung.

Nur die Aussparungen 3 im Bereich der Manipulatoreinheiten zu verbreitern, indem eine Fräsung überlappend über ihre Breite nebeneinanderliegend ausgeführt wird, erhöht die Prozessdauer und stellt eine verschlechterte Ausführung einer erfindungsgemäßen Fassung dar.

Die Steifigkeit der Manipulatoreinheiten wird unbeachtet der Materialsteifigkeit durch die Breite und Dicke der Stege bestimmt.

Die erfindungsgemäße optische Fassung zeichnet sich durch eine sehr einfache und damit kostengünstige Herstellbarkeit aus, wobei sie wenigstens für einige Anwendungen hinreichend genau ihre Funktion erfüllt.

Bezugszeichenliste

1 feststehender äußerer Fassungsring

2 verstellbarer innerer Fassungsring

3 Aussparung

4.1 Fußstück eines T-förmigen Steges

4.2 Erster Schenkel eines L-förmigen Steges

5.1 Kopfstück eines T-förmigen Steges

5.2 Zweiter Schenkel eines L-förmigen Steges

6 Aktuatoren

7 Feder

8.1 T-förmiger Steg

8.2 L-förmiger Steg

F_{R} radiale Kraft

## Patentansprüche

1. Monolithische optische Fassung, die durch eine Vielzahl von Aussparungen (3) in einen feststehenden äußeren Fassungsring (1), einen lateral verstellbaren inneren Fassungsring (2) sowie zueinander gleichmäßig versetzt angeordnete Manipulatoreinheiten unterteilt ist, die durch verbleibende Materialverbindungen gebildet sind und Aktuatoren (6) zur Manipulation der Manipulatoreinheiten aufweist, **dadurch gekennzeichnet,**
**dass** die Aussparungen (3) eine gleiche konstante Breite aufweisen und den inneren Fassungsring (2) vom äußeren Fassungsring (1) bis auf Manipulatoreinheiten bildende Stege trennen und die Stege jeweils aus einem radial ausgerichteten inneren Stegabschnitt und einem tangential ausgerichteten äußeren Stegabschnitt bestehen und die Aktuatoren (6) jeweils mittelbar über die äußeren Stegabschnitte an den inneren Stegabschnitten angreifend, in radialer Richtung der inneren Stegabschnitte wirkend, angeordnet sind.

2. Monolithische optische Fassung nach Anspruch 1, **dadurch gekennzeichnet,**
**dass** die Stege T-förmige Stege (8.1) sind, mit einem Fußstück (4.1) und einem Kopfstück (5.1), wobei das Fußstück (4.1) den inneren Stegabschnitt bildet, welches mit dem inneren Fassungsring (2) verbunden ist und das Kopfstück (5.1) den äußeren Stegabschnitt darstellt, welcher endseitig mit dem äußeren Fassungsring (1) in Verbindung steht.

3. Monolithische optische Fassung nach Anspruch 1, **dadurch gekennzeichnet,**
**dass** die Stege L-förmige Stege (8.2) sind, von denen ein erster Schenkel (4.2) den inneren Stegabschnitt bildet, welcher mit dem inneren Fassungsring (2) verbunden ist und der zweite Schenkel (5.2) den äußeren Stegabschnitt darstellt, welcher endseitig mit dem äußeren Fassungsring (1) in Verbindung steht.

4. Monolithische optische Fassung nach Anspruch 1, **dadurch gekennzeichnet,**
**dass** drei um 120° zueinander versetzte Manipulatoreinheiten vorhanden sind.

5. Monolithische optische Fassung nach Anspruch 1, **dadurch gekennzeichnet,**
**dass** vier um 90° zueinander versetzte Manipulatoreinheiten vorhanden sind.

## Claims

1. A monolithic optical mount, divided by a plurality of cutouts (3) into a stationary outer mount ring (1), a laterally adjustable inner mount ring (2), as well as manipulator units arranged equally off-set in reference to each other, which are formed by remaining material connections and comprising actuators (6) for manipulating the manipulator units, **characterised in that** the cutouts (3) show an equally constant width and separate the inner mount ring (2) from the outer mount ring (1) except for bars forming manipulator units and the bars each comprising a radially aligned inner bar section and a tangentially aligned outer bar section and the actuators (6) are each arranged engaging the inner bar sections indirectly via the outer bar sections, acting in the radial direction of the inner bar sections.

2. A monolithic optical mount according to claim 1, **characterised in that** the bars are T-shaped bars (8.1) having a foot part (4.1) and a head part (5.1), with the foot part (4.1) forming the inner bar section, which is connected to the inner mount ring (2) and the head part (5.1) representing the outer bar section, which is connected at the end side to the outer mount ring (1).

3. A monolithic optical mount according to claim 1, **characterised in that** the bars are L-shaped bars (8.2), with a first leg (4.2) forming the inner bar section, which is connected to the inner mount ring (2), and the second leg (5.2) representing the outer bar section, which is connected at the end side to the outer mount ring (1).

4. A monolithic optic mount according to claim 1, **characterised in that** three manipulator units are provided, off-set in reference to each other by 120°.

5. A monolithic optic mount according to claim 1, **characterised in that** four manipulator units are provided, off-set in reference to each other by 90°.

## Revendications

1. Monture optique monolithe, divisée par une multiplicité d'évidements (3) en une bague de monture extérieure (1) fixe, une bague de monture intérieure latéralement (2) déplaçable, ainsi que des unités manipulatrices disposées avec un décalage uniforme entre elles, ces unités manipulatrices étant formées par des assemblages de matière restants et comprenant des actionneurs (6) pour la manipulation des unités manipulatrices, **caractérisée en ce que** les évidements (3) présentent une largeur constante identique et **en ce qu'**ils séparent la bague de monture intérieure (2) de la bague de monture extérieure (1) à l'exception d'entretoises formant des unités manipulatrices et chaque entretoise étant constituée d'une partie d'entretoise intérieure alignée radialement et une partie d'entretoise extérieure alignée tangentiellement et chaque actionneur (6) est disposé de manière à venir en prise dans les parties d'entretoise intérieures indirectement par les parties d'entretoise extérieures, agissant en direction radiale des parties d'entretoise intérieures.

2. Monture optique monolithe selon la revendication 1, **caractérisée en ce que** les entretoises sont des entretoises en forme de T (8.1) présentant un pied (4.1) et une tête (5.1), le pied (4.1) constituant la partie d'entretoise intérieure, qui est reliée à la bague de monture intérieure (2), et la tête (5.1) représentant la partie d'entretoise extérieure, qui est reliée par son extrémité à la bague de monture extérieure (1).

3. Monture optique monolithe selon la revendication 1, **caractérisée en ce que** les entretoises sont des entretoises en forme de L (8.2), dont un premier bras (4.2) constitue la partie d'entretoise intérieure, qui est reliée à la bague de monture intérieure (2), et le deuxième bras (5.2) constitue la partie d'entretoise extérieure, qui est reliée par son extrémité à la bague de monture extérieure (1).

4. Monture optique monolithe selon la revendication 1, **caractérisée en ce que** l'on prévoit trois unités manipulatrices avec un décalage de 120° entre elles.

5. Monture optique monolithe selon la revendication 1, **caractérisée en ce que** l'on prévoit quatre unités manipulatrices avec un décalage de 90° entre elles.
